# EUROPÄISCHE PATENTSCHRIFT

(11) **EP 3 825 959 B1**
(45) Veröffentlichungstag und Bekanntmachung des Hinweises auf die Patenterteilung: **23.08.2023**
(21) Anmeldenummer: 20208370.5
(22) Anmeldetag: 18.11.2020
(51) Int. Cl.: G06T 7/12

(54) **COMPUTERIMPLEMENTIERTES VERFAHREN ZUR SEGMENTIERUNG VON MESSDATEN AUS EINER MESSUNG EINES OBJEKTS**
COMPUTER-IMPLEMENTED METHOD FOR SEGMENTING MEASUREMENT DATA FROM A MEASUREMENT OF AN OBJECT
PROCÉDÉ MIS EN UVRE PAR ORDINATEUR DESTINÉ À LA SEGMENTATION DES DONNÉES DE MESURE À PARTIR D'UNE MESURE D'UN OBJET

(30) Priorität: 21.11.2019 DE 102019131440
(43) Veröffentlichungstag der Anmeldung: 26.05.2021
(73) Patentinhaber: Volume Graphics GmbH, 69115 Heidelberg (DE)
(72) Erfinder: POLIWODA, Christoph, 69115 Heidelberg (DE); SCHÜLLER, Sören, 69115 Heidelberg (DE)
(74) Vertreter: Patentanwälte Olbricht Buchhold Keulertz

(56) Entgegenhaltungen:
- SHAMMAA HAITHAM ET AL: "Creeping Contours: A Multilabel Image Segmentation Method for Extracting Boundary Surfaces of Parts in Volumetric Images", JOURNAL OF COMPUTING AND INFORMATION SCIENCE IN ENGINEERING, Bd. 11, Nr. 1, 1. März 2011 (2011-03-01), XP055789416, US ISSN: 1530-9827, DOI: 10.1115/1.3569830 Gefunden im Internet: URL:http://asmedigitalcollection.asme.org/ computingengineering/article-pdf/doi/10.11 15/1.3569830/5494741/011007_1.pdf>
- HAITHAM SHAMMAA M ET AL: "Segmentation of multi-material CT data of mechanical parts for extracting boundary surfaces", COMPUTER-AIDED DESIGN, ELSEVIER PUBLISHERS BV., BARKING, GB, Bd. 42, Nr. 2, 1. Februar 2010 (2010-02-01), Seiten 118-128, XP026827718, ISSN: 0010-4485 [gefunden am 2009-08-26]
- NIIZAKA TAKUMA ET AL: "Multi-material Volume Segmentation for Isosurfacing Using Overlapped Label Propagation", WSCG 2011, 1. Januar 2011 (2011-01-01), XP55790397, ISBN: 978-80-86-94383-1 Gefunden im Internet: URL:https://core.ac.uk/download/pdf/295558 171.pdf>

## Beschreibung

Die Erfindung betrifft ein computerimplementiertes Verfahren zur Segmentierung von Messdaten aus einer Messung eines Objekts.

Zur Qualitätssicherung, ob hergestellte Objekte den gewünschten Vorgaben entsprechen, werden diese Objekte vermessen und mit den gewünschten Vorgaben verglichen. Die Messung kann dabei z. B. als dimensionelle Messung durchgeführt werden. Dimensionelle Messungen können z. B. mittels der Antastung verschiedener Punkte der Oberfläche des Objekts erfolgen. Weiter können z. B. computertomographische Messungen durchgeführt werden, wobei die damit gewonnenen Messdaten analysiert werden. In diesem Fall können auch Oberflächen innerhalb der Objekte geprüft werden. Die Messdaten können dabei beispielsweise als Volumendaten vorliegen bzw. in Volumendaten umgewandelt werden. Um verschiedene Bereiche des Objekts in den Messdaten voneinander unterscheiden zu können, werden die Messdaten in verschiedene Bereiche segmentiert. Speziell von Interesse ist dies z. B. bei der Visualisierung, dem Reverse Engineering, der Mehrkomponenten-Funktionsanalyse und der Simulation von Materialen und Materialeigenschaften. Weiter können die Messdaten vor Durchführung des Verfahrens vorverarbeitet werden. Es können beispielsweise Artefaktkorrekturen, z. B. Metallartefakt, Strahlaufhärtungs oder Streustrahlungskorrekturen auf Basis der segmentierten Geometrie, und Datenfilter, z. B. Gauß oder Median-Filter, auf die Messdaten angewendet werden.

Die Segmentierung von Volumendaten von Multimaterial-Messobjekten kann bisher jedoch nicht zufriedenstellend durchgeführt werden, da für jeden Materialübergang zwischen zwei spezifischen Materialien spezifische Anpassungen der Segmentierungsalgorithmen benötigt werden. So müssen zum Beispiel bei der Analyse von Grauwerten zur Erkennung von Materialübergängen zwischen Materialien, die vergleichsweise geringe Grauwerte in den Messdaten aufweisen, geringere Schwellwerte verwendet werden, als zur Erkennung von Materialübergängen zwischen Materialien, die vergleichsweise hohe Grauwerte in den Messdaten aufweisen. Es ist somit nicht aussichtsreich, anhand eines globalen Schwellwerts eine Segmentierung dieser Volumendaten zu erreichen. Insbesondere wenn die Messdaten Artefakte oder kleine Strukturen aufweisen, können viele Algorithmen, die verschiedenen Materialien nicht korrekt segmentieren. Weiter reicht eine korrekte Segmentierung nicht aus, um an allen Materialübergängen präzise Messergebnisse zu liefern, d. h. die Position der Materialübergänge präzise zu bestimmen.

Aus Shammaa Haitham ET AL: "Creeping Contours: A Multilabel Image Segmentation Method for Extracting Boundary Surfaces of Parts in Volumetrie Images", JOURNAL OF COMPUTING AND INFORMATION SCIENCE IN ENGINEERING, Bd. 11, Nr. 1, 1. März 2011 (2011-03-01) ist ein Verfahren bekannt, um mittels kriechender Konturen die Grenzflächen von Komponenten eines abgebildeten Objekts zu extrahieren. Kriechende Konturen sind Konturen, die sich ausgehend von einer manuell oder automatisch definierten Anfangskonturposition nach einer Geschwindigkeitsfunktion ausdehnen, die durch die Steigung und Krümmung an Konturpunkten definiert ist. Die Konturen im Bild kriechen gleichzeitig mit unterschiedlichen Geschwindigkeiten, während Konturpixeln durch die definierte Kriechbedingung Labels zugewiesen werden.

Aus HAITHAM SHAMMAA M ET AL: "Segmentation of multi-material CT data of mechanical parts for extracting boundary surfaces", COMPUTER-AIDED DESIGN, ELSEVIER PUBLISH-ERS BV., BARKING, GB, Bd. 42, Nr. 2, 1. Februar 2010 (2010-02-01), Seiten 118-128 ist ein Verfahren zur Segmentierung von Materialien bekannt, bei dem in volumetrischen Modellen mechanische Teile segmentiert sind, die durch Röntgen-CT-Scans erstellt wurden, um deren Grenzflächen zu erzeugen. Wenn das volumetrische Modell aus zwei Materialien besteht, eines für das Objekt und das andere für den Hintergrund (Luft), können diese Grenzflächen mit einem Oberflächenkonturierungsverfahren als Isoflächen extrahiert werden. Das Verfahren verwendet für die Klassifizierung des volumetrischen Modells in seine Komponentenmaterialien eine modifizierte und kombinierte Methode zweier bekannter Algorithmen in der Bildsegmentierung, Region Growing und Graph-Cut.

Als Aufgabe der Erfindung kann daher angesehen werden, ein verbessertes computerimplementiertes Verfahren zur Segmentierung von Messdaten aus einer Messung eines Objekts, das kleine Strukturen aufweist, zu schaffen, wobei das Verfahren eine korrekte Erkennung von Materialübergängen aus den Messdaten des Objekts bereitstellt.

Hauptmerkmale der Erfindung sind in den Ansprüchen 1 und 14 angegeben. Ausgestaltungen sind Gegenstand der Ansprüche 2 bis 13.

In einem Aspekt der Erfindung wird ein computerimplementiertes Verfahren zur Segmentierung von Messdaten aus einer Messung eines Objekts bereitgestellt, wobei das Objekt mindestens einen Materialübergangsbereich aufweist, wobei durch die Messdaten eine digitale Objektdarstellung mit dem mindestens einen Materialübergangsbereich erzeugt wird, wobei die digitale Objektdarstellung eine Vielzahl von ortsaufgelösten Bildinformationen des Objekts aufweist, wobei das Verfahren die folgenden Schritte aufweist: Ermitteln der Messdaten, wobei die Messdaten mindestens eine Kleinstruktur aufweisen, die eine Textur oder eine Struktur ist, die eine Ausdehnung aufweist, die kleiner als eine vordefinierte Ausdehnung ist; Ausrichten einer digitalen Darstellung einer Soll-Geometrie an die digitale Objektdarstellung; wobei die Bereiche der Soll Geometrie den entsprechenden Bereichen der Messdaten zugeordnet sind; wobei die Ermittlung der Position der Materialübergänge auf Vorwissen aus der Soll- Geometrie zurückgreift im Rahmen einer Vorsegmentierung; Ermitteln von mindestens zwei homogenen Bereichen in den Messdaten und/oder in der digitalen Objektdarstellung auf Basis der digitalen Darstellung der Soll-Geometrie, wobei mindestens einer der mindestens zwei homogenen Bereiche eine Kleinstruktur aufweist; Analysieren einer lokalen Ähnlichkeit der Vielzahl von ortsaufgelösten Bildinformationen; Identifizieren einer erwarteten Positionen eines Materialübergangsbereiches mittels der analysierten lokalen Ähnlichkeit, wobei die analysierte lokale Ähnlichkeit in einem Materialübergangsbereich einen vorbestimmten Schwellwert für die lokale Ähnlichkeit überschreitet; Anpassen einer Ausdehnung jedes homogenen Bereichs bis mindestens ein Grenzbereich jedes homogenen Bereiches an der erwarteten Position eines Materialübergangsbereichs angeordnet ist; Segmentieren der digitalen Objektdarstellung auf Basis der angepassten homogenen Bereiche.

Mit der Erfindung werden verschiedene Algorithmen genutzt, um Objekte, die Kleinstrukturen aufweisen zu segmentieren. Dabei untersuchen die Algorithmen verschiedene Darstellungsformen der Messdaten des Objekts. Mittels der Verwendung verschiedener Algorithmen mit ihren jeweiligen Vorteilen und Nachteilen, lassen sich die Stärken der genutzten Algorithmen bestmöglich ausnutzen. So können beispielsweise mit einem Algorithmus zunächst die Bildinformationen der Messdaten analysiert werden, wobei z. B. jede Bildinformation mit den örtlich benachbarten Bildinformationen verglichen wird, um homogene Bereiche zu ermitteln. Dies kann als Vorsegmentierung bezeichnet werden. Weiter kann dies z. B. vorteilhafterweise auf dreidimensionalen Messdaten durchgeführt werden. Jedoch können auch zweidimensionale Messdaten, die auch mit den dreidimensionalen Messdaten verknüpft sein können, verwendet werden. Ähnliche Bildinformationen werden dann zu einem homogenen Bereich zusammengefasst. Auf diese Weise wird mindestens ein homogener Bereich ermittelt. Dabei kann ein der Ermittlung des homogenen Bereiches zugrundeliegender Algorithmus ungenau sein, so dass die Grenzen des homogenen Bereiches sich nicht mit den Positionen der Materialübergangsbereiche decken, die den homogenen Bereich begrenzen könnten. Mit einem weiteren Algorithmus kann die lokale Ähnlichkeit der Bildinformationen analysiert werden. Mittels der Analyse der lokalen Ähnlichkeit können Bereiche ermittelt werden, in denen die Bildinformationen sich nur wenig mit benachbarten Bildinformationen ähneln. Diese Bereiche können als erwartete Position eines Materialübergangsbereichs identifiziert werden. Die erwartete Position kann sich dabei auch z. B. aus der Soll-Geometrie des Objekts oder aus einer anderen Darstellung der Messdaten ergeben. Ein Grenzbereich des homogenen Bereichs wird dann mittels eines weiteren Algorithmus z. B. durch Verschieben seiner Position angepasst. Dabei kann die Ausdehnung des homogenen Bereichs verändert werden. Die Position des Grenzbereichs wird so lange angepasst, bis der Grenzbereich eine erwartete Position eines Materialübergangsbereichs umfasst. Nachteile einzelner Algorithmen können damit durch die Verwendung weiterer Algorithmen ausgeglichen werden. Unter einem Grenzbereich wird dabei ein Teilbereich des homogenen Bereiches verstanden, der den homogenen Bereich begrenzt. Der Grenzbereich kann dabei eine vordefinierte Grenzbereichsausdehnung innerhalb des homogenen Bereichs aufweisen.

In dem Beispiel können in der Darstellung der lokalen Ähnlichkeit Bereiche, die Werte aufweisen, die einen vorbestimmen Schwellwert für die lokale Ähnlichkeit überschreiten, als Materialübergangsbereiche zwischen verschiedenen Materialbereichen identifiziert werden. Bereiche, die von den Materialübergangsbereichen begrenzt werden, werden dann komplett demjenigen Material zugeordnet, welches nach der Vorsegmentierung den größten Anteil an diesem Bereich hatte. Dabei kann es auch passieren, dass kein geschlossener Materialübergangsbereich zwischen den Materialbereichen gebildet wird. Dieser kann beispielsweise durch eine morphologische Operation des "Closing" geschlossen werden, bei der die betreffenden Materialübergangsbereiche zusammenwachsen und kleine Bereiche dazwischen entfernt werden.

Damit wird eine Segmentierung der digitalen Objektdarstellung auf Basis der angepassten homogenen Bereiche zwischen den mindestens zwei homogenen Bereichen durchgeführt. Dabei kann die Bestimmung der erwarteten Positionen eines Materialübergangsbereiches einen kleinen Suchbereich am Rand der homogenen Bereiche aufweisen, in denen die Materialübergangsbereiche gesucht werden. Dabei wird vor dem Schritt Segmentieren der digitalen Objektdarstellung auf Basis der angepassten homogenen Bereiche, der zusammen mit den Schritten Analysieren einer lokalen Ähnlichkeit der Vielzahl von ortsaufgelösten Bildinformationen und Anpassen einer Ausdehnung jedes homogenen Bereichs bis mindestens ein Grenzbereich jedes homogenen Bereiches an einer erwarteten Position eines Materialübergangsbereichs angeordnet ist, als Hauptsegmentierung, z. B. als vergleichsweise feine Segmentierung, fungieren kann, eine Vorsegmentierung, z. B. eine vergleichsweise grobe Segmentierung durchgeführt. Die Vorsegmentierung kann z. B. den Schritt Ermitteln von mindestens zwei homogenen Bereichen in den Messdaten und/oder in der digitalen Objektdarstellung, wobei mindestens einer der mindestens zwei homogenen Bereiche eine Kleinstruktur aufweist, umfassen. Dabei können in der darauffolgenden Hauptsegmentierung beispielsweise Materialübergangsbereiche zwischen den homogenen Bereichen ermittelt werden, wenn die lokale Ähnlichkeit verringert ist. Ansonsten werden die betreffenden homogenen Bereiche zusammengefasst. Ein Materialübergangsbereich kann dabei zum Beispiel eine Materialoberfläche, zwei aneinanderstoßende Materialoberflächen, mehrere durch schmale Materialbereiche getrennte Materialübergänge oder einen Übergang der inneren Struktur eines einzelnen Materials usw. aufweisen. Ergebnis dieser groben Segmentierung kann die Erkennung der Ausdehnung von homogenen Bereichen, aber auch von Bereichen ähnlicher Textur oder von Kleinstrukturen in den homogenen Bereichen sein. Danach kann der Schritt Segmentieren der digitalen Objektdarstellung auf Basis der angepassten homogenen Bereiche durchgeführt werden. Kleinstrukturen in den homogenen Bereichen können durch die Kombination der Vorsegmentierung und der Hauptsegmentierung besser erkannt werden als ohne diese Kombination.

Unter einer Kleinstruktur kann z. B. eine Textur oder eine Struktur, die eine Ausdehnung aufweist, die kleiner als eine vordefinierte Ausdehnung ist, verstanden werden. Mit der vordefinierten Ausdehnung wird die Größe der mindestens einen Kleinstruktur bestimmt. Die vordefinierte Ausdehnung kann durch einen Benutzer oder eine Auswertevorschrift für das Verfahren vorgegeben werden.

Unter einem homogenen Bereich wird dabei ein Bereich verstanden, der ein einheitliches Material oder eine einheitliche Materialmischung aufweist. Die Bildinformationen können beispielsweise Grauwerte sein, die aus Messdaten einer computertomographischen Messung im Rahmen einer dimensionellen Messung eines Objekts erhalten werden.

Als homogen gelten weiter Bereiche, deren Messdaten oder Bildinformationen beispielsweise zwischen zwei Schwellwerten, z. B. einem oberen und einem unteren Schwellwert, liegen, d. h. in denen die lokalen Messdaten ähnlich sind bzw. ähnliche Werte aufweisen, d.h. wenn eine lokale Ähnlichkeit hoch ist. Die Bildinformationen eines homogenen Bereichs in der digitalen Objektdarstellung können damit in einem Beispiel Grauwerte innerhalb eines schmalen Grauwertintervalls aufweisen. Im Objekt können diese Bereiche ein einheitliches Material oder eine einheitliche Materialmischung aufweisen. Die homogenen Bereiche sind damit nicht absolut homogen, sondern können Schwankungen innerhalb einer Toleranz aufweisen. Die Schwellwerte können vordefiniert sein oder im Rahmen der Ermittlung der homogenen Bereiche bestimmt werden. Die Homogenität der Bereiche muss jedoch nicht mittels der Grauwerte definiert sein. In einem anderen Beispiel können auch Bereiche mit einem faserhaltigen Material mit einer ähnlichen Faserorientierung als homogen gelten, auch wenn die Grauwerte selbst in diesem Fall nicht homogen sind. Allerdings ist dann das Muster homogen, das durch die Textur definiert wird, die aus den Fasern resultiert. Das Material eines Bereichs oder auch des gesamten Objekts kann beispielsweise ein Monomaterial sein, d. h. die Materialübergänge in den Materialübergangsbereichen können in diesem Beispiel dann Übergänge zwischen verschiedenen Materialstrukturen oder ein Übergang von dem Monomaterial zum Hintergrund sein.

Ein Materialübergangsbereich kann z. B. ein Übergang zwischen biologischen Materialien, Schweißnähte oder Bereiche unterschiedlicher Faserorientierung aufweisen. Es ist nicht erforderlich, dass der Materialübergangsbereich eine klare Materialoberfläche aufweist. Ein Materialübergangsbereich kann in einem weiteren Beispiel sowohl bei Messungen als auch bei einem CAD-Modell als eine Oberfläche angenähert bzw. repräsentiert werden.

Weiter kann der mindestens eine Materialübergangsbereich beispielsweise ein Multi-Materialübergangsbereich mit mindestens zwei Materialübergängen sein. Der Begriff Multi-Material bezieht sich dabei nicht nur auf Bereiche mehrerer homogener einzelner Materialien. Auch das Vorhandensein von Fasern oder Porositäten kann jeweils einen eigenen Materialbereich innerhalb eines Monomaterials spezifizieren, auch wenn das zugrundeliegende Material identisch bleibt. Auch Bereiche unterschiedlicher Eigenschaften, insbesondere bei gleicher oder ähnlicher Materialzusammensetzung, können explizit als eigene Materialien interpretiert werden. So kann ebenfalls der Hintergrund eines CT-Scans, üblicherweise die Luft um das Objekt, ein Material in den Messdaten sein.

D. h. neben den Bildinformationen, die einen Hintergrund des Objekts darstellen, umfasst das Objekt mindestens zwei Materialien in den Messdaten, für die die Materialübergänge, z. B. Oberflächen, bestimmt werden.

Gemäß einem weiteren Beispiel können nach dem Schritt Ermitteln von mindestens zwei homogenen Bereichen in den Messdaten und/oder in der digitalen Objektdarstellung, wobei mindestens einer der mindestens zwei homogenen Bereiche eine Kleinstruktur aufweist, den mindestens zwei homogenen Bereichen vordefinierte Materialien zugeordnet werden.

Das Verfahren kann damit nach der Vorsegmentierung, der Hauptsegmentierung oder einer darauf folgenden optionalen exakten Oberflächenbestimmung bzw. exakten Bestimmung der Positionen der Materialübergangsbereiche auf Basis der erwarteten Positionen der Materialübergangsbereiche und der segmentierten Objektdarstellung, den einzelnen segmentierten Bereichen das zugehörige spezifische Material zuzuordnen, soweit dies noch nicht vorher z. B. durch eine Vorausrichtung an einer Soll-Geometrie, z. B. einem CAD-Modell, geschehen ist. Sollte keine Soll-Geometrie vorliegen, kann dies mittels verschiedener Verfahren durchgeführt werden. Die typischen Grauwerte des segmentierten Bereichs können beispielsweise mit einer Liste zu erwartender Materialien und der zugehörigen Grauwerte bzw. Absorptionskoeffizienten abgeglichen werden. Alternativ oder zusätzlich kann anhand der Geometrie des segmentierten Bereichs beispielsweise eine Art Teilekatalog vorliegen, welcher Geometrien enthält, die mit der Geometrie des Bereichs abgeglichen werden können.

Es kann gemäß einem weiteren Beispiel vorgesehen sein, dass das Verfahren folgenden weiteren Schritt aufweist: Ermitteln einer Soll-Bildinformation aus mindestens einem homogenen Bereich, wenn in mindestens einem der Schritte des Verfahrens ermittelt wird, dass dieser mindestens eine homogene Bereich eine Ausdehnung aufweist, die kleiner als eine vordefinierte Ausdehnung ist.

Während der Analysen kann es vorkommen, dass neue, kleine Bereiche identifiziert werden, die noch keinem Material zugeordnet wurden. Aufgrund der kleinen Größe dieser Bereiche ist es schwierig, ein, ggf. konstantes, Grauwertniveau zu ermitteln, um das zugehörige Material zu ermitteln. Dies ist insbesondere dann der Fall, wenn die Punktspreizfunktion (PSF) des Aufnahmesystems in der gleichen Größenordnung oder größer als die Größe des kleinen Bereichs ist. In diesem Fall beeinflussen bzw. verfälschen die benachbarten Materialien bzw. homogenen Bereiche die Grauwerte des kleinen Bereichs. Daher wird in diesem Beispiel ein theoretisch korrekter bzw. ungestörter Grauwert für den kleinen Bereich ermittelt. Dieser theoretisch korrekte bzw. ungestörte Grauwert ist der homogene Grauwert, den dieses Material hätte, wenn es ungestört von benachbarten Materialien vorkommen würde. Dafür kann beispielsweise das Wissen über die Grauwerte der benachbarten Bereiche im Homogenen, die PSF und/oder die Geometrie der Grenzfläche verwendet werden. Auf Grundlage dieses Wissens kann beispielsweise, ggf. modellbasiert, berechnet werden, wie das korrekte Grauwertniveau des kleinen Bereichs sein müsste, um den in den Messdaten auftretenden Grauwertverlauf zu verursachen. In einem anderen Beispiel kann dieser theoretisch korrekte bzw. ungestörte Grauwert mittels einer mathematischen Entfaltung ermittelt werden. Mit Hilfe des theoretisch korrekten bzw. ungestörten Grauwertes ist nun eine Zuordnung zum Material möglich.

In einem weiteren Beispiel kann in einem der mindestens zwei homogenen Bereiche ein vordefiniertes Material auf Basis einer Topologie des einen der mindestens zwei homogenen Bereiche zugeordnet werden, wenn in mindestens einem der Schritte des Verfahrens ermittelt wird, dass dieser mindestens eine homogene Bereich eine Ausdehnung aufweist, die kleiner als die vordefinierte Bereichsausdehnung ist.

Neuen Bereichen wird dabei mittels einer Analyse der Topologie ein Material zugeordnet. Hierbei wird die Information zu verbundenen Materialien in der Umgebung verwendet. Wenn z. B. ein neuer Bereich in einem Materialübergangsbereich zwischen zwei Materialien entdeckt wurde, kann dieser neue Bereich mittels einer Analyse der Topologie ggf. angrenzenden Bereichen zugeordnet werden. Die Topologien des neuen Bereiches und der angrenzenden Bereiche werden untersucht. Mittels der untersuchten Topologie wird erfasst, ob Verbindungen zwischen dem neuen Bereich und den angrenzenden Bereichen bestehen. Teilbereiche des neuen Bereiches, die Verbindungen zu einem der angrenzenden Bereiche aufweisen, werden diesem angrenzenden Bereich zugeordnet und mit dem entsprechenden angrenzenden Bereich verbunden. Dabei kann auch der gesamte neue Bereiche mit dem entsprechenden angrenzenden Bereich verbunden werden. Ebenso können mit der untersuchten Topologie Grenzflächen zwischen dem neuen Bereich oder Teilbereichen des neuen Bereichs und angrenzenden Bereichen ermittelt werden. Angrenzende Bereiche, die Grenzflächen zu dem neuen Bereich oder Teilbereichen aufweisen, können für eine Verbindung mit dem neuen Bereiche oder dessen Teilbereichen ausgeschlossen werden. Weiter kann der neue Bereich einen separaten homogenen Bereich bilden, wenn auf Grund der untersuchten Topologie feststeht, dass keine Verbindungen zu angrenzenden Bereichen bestehen. Damit wird diese Info genutzt, um zu prüfen, ob dieser Bereich zu einem dieser Materialien gehört, z. B. aufgrund eines theoretisch korrekten bzw. ungestörten Grauwertniveaus.

Alternativ oder zusätzlich können bestimmte an den neuen Bereich angrenzende Bereiche bereits ausgeschlossen werden, da dieser neue Bereich aufgrund seiner Topologie ein separater Bereich sein muss.

In einem weiteren Beispiel kann das Analysieren der lokalen Ähnlichkeit auf einem Änderungsverlauf der Vielzahl von ortsaufgelösten Bildinformationen und/oder einer lokalen Varianz der Vielzahl von ortsaufgelösten Bildinformationen basieren.

Wenn die Bildinformationen z. B. Grauwerte sind, kann der Änderungsverlauf den Gradienten der ortsaufgelösten Grauwerte darstellen. Wenn die homogenen Bereiche auf Texturen begründet werden, kann z. B. die lokale Varianz der Bildinformationen zur Bestimmung der lokalen Ähnlichkeit verwendet werden. Bei einer Gradientendarstellung handelt es sich dabei bevorzugt um den Betrag des lokalen Gradienten. In der Nähe von Materialübergangsbereichen zeigen sie erhöhte Werte an.

Erfindungsgemäß weist das Verfahren vor dem Ermitteln von mindestens zwei homogenen Bereichen der digitalen Objektdarstellung weiter folgende Schritte auf: Ausrichten einer digitalen Darstellung einer Soll-Geometrie an die digitale Objektdarstellung; wobei das Ermitteln von mindestens zwei homogenen Bereichen auf Basis der digitalen Darstellung einer Soll-Geometrie durchgeführt wird.

Damit können z. B. die erwarteten Positionen der Materialübergangsbereiche aus der Soll-Geometrie entnommen werden, um zumindest eine grobe Vor-Ausrichtung der Messdaten zu erhalten. Dabei kann die Soll-Geometrie ein CAD-Modell des Objekts sein. Die Bereiche der Soll-Geometrie bzw. des CAD-Modells können dann den entsprechenden Bereichen der Messdaten zugeordnet werden. Das computerimplementierte Verfahren kann damit bei der Ermittlung der Position der Materialübergänge auf Vorwissen aus der Soll-Geometrie zurückgreifen. Dies kann im Rahmen einer Vorsegmentierung durchgeführt werden.

Alternativ oder zusätzlich können auch Informationen über die Geometrie des Objektes aus einer Messung mit einem anderen Sensor, z. B. optische Methoden wie die Streifenlichtprojektion, verwendet werden.

Beispielsweise kann das Verfahren nach dem Schritt Ermitteln von mindestens zwei homogenen Bereichen in den Messdaten und/oder in der digitalen Objektdarstellung, wobei mindestens einer der mindestens zwei homogenen Bereiche eine Kleinstruktur aufweist, den Schritt aufweisen: Erstellen eines Labelfelds, das die homogenen Bereiche mittels ortsaufgelöster Labelwerte in den Messdaten und/oder der digitalen Objektdarstellung definiert; wobei eine Ortsauflösung des Labelfelds höher ist als eine Ortsauflösung der Messdaten.

Wenn kleine Strukturen segmentiert werden müssen, z. B. dünne Schichten eines Materials zwischen zwei anderen Materialien, kann die Erkennungssicherheit weiter verbessert werden, wenn nach der Vorsegmentierung eine Anpassung der homogenen Bereiche an die Kleinstrukturen stattfindet. Dabei kann die Hauptsegmentierung z. B. mit Hilfe eines Labelfelds durchgeführt werden, das die homogenen Bereiche, z. B. als einzelne Materialbereiche, definiert, die z. B. von den Materialübergangsbereichen begrenzt werden können. Das Labelfeld und die Messdaten müssen dazu nicht die gleiche Ausrichtung aufweisen. Um sicherstellen zu können, dass die Materialbereiche auch in Kleinstrukturen, d. h. z. B. kleine, dünne und/oder schmale Strukturen, angepasst werden können, kann die Auflösung des Labelfelds größer, d. h. feiner, als die Auflösung der zu segmentierenden Messdaten gewählt werden.

Ein Labelfeld ordnet einem Ort in der digitalen Objektdarstellung ein Material zu. Dazu kann eine Zuordnung verschiedener Werte oder Wertintervalle der Bildinformationen, z. B. Grauwerte, durchgeführt werden. So können z. B. bestimmte Intervalle, die sich jeweils zwischen zwei Schwellwerten befinden, verschiedenen Materialien zugeordnet werden. Gleichzeitig werden mit der Zuordnung die homogenen Bereiche definiert. Das Labelfeld stellt implizit die groben Positionen der Materialübergangsbereiche dar. Jedem Labelwert kann gemäß einem weiteren Beispiel ein Distanzwert eines Distanzfelds zugeordnet werden, wobei der Distanzwert den kürzesten Abstand zu einer nächstgelegenen Grenzfläche des betreffenden homogenen Bereiches definiert. Das Distanzfeld repräsentiert die Lage der Oberfläche implizit. Die endgültigen Materialübergangsbereiche der unterschiedlichen Materialien können subvoxelgenau mit Hilfe eines einzigen, ggf. vorzeichenlosen, Distanzfeldes gespeichert werden. Das Distanzfeld kann dabei darstellen bzw. speichern, wo sich Oberflächen befinden. Ein Labelwert kann dabei auch mehreren Distanzwerten zugeordnet sein und damit z. B. in Überschneidungsbereichen der homogenen Bereiche verschiedenen homogenen Bereichen zugeordnet werden. Zusammen mit dem Labelfeld kann für jeden Bereich der Oberfläche ermittelt werden, um welchen Materialübergangsbereich es sich handelt. Dies kann durch die Materialien angezeigt werden, welche im Labelfeld benachbart dargestellt sind. Da das Labelfeld bei der Bestimmung der Oberfläche oftmals sowieso vorliegt, ist ein Distanzfeld somit eine besonders effiziente Möglichkeit, diese zu beschreiben bzw. zu speichern.

In einem weiteren Bespiel kann das Verfahren nach dem Schritt Ermitteln von mindestens zwei homogenen Bereichen in den Messdaten und/oder in der digitalen Objektdarstellung, wobei mindestens einer der mindestens zwei homogenen Bereiche eine Kleinstruktur aufweist, den Schritt aufweisen: Erstellen eines Labelfelds, das die homogenen Bereiche mittels ortsaufgelöster Labelwerte in den Messdaten und/oder der digitalen Objektdarstellung definiert; wobei mindestens in vordefinierten Regionen der Objektdarstellung eine Ortsauflösung des Labelfelds höher ist als eine Ortsauflösung der Messdaten, wobei in den Restregionen der Objektdarstellung die Ortsauflösung des Labelfelds höchstens so groß ist wie die Ortsauflösung der Messdaten.

Die Auflösung kann lokal variieren, um die Rechenzeit zu optimieren. An Positionen, an denen Kleinstrukturen vermutet werden, kann die Auflösung des Labelfelds groß gewählt werden. In den Bereichen, in denen keine Kleinstrukturen vermutet werden oder keine Kleinstrukturen angeordnet sein können, kann die Auflösung prinzipiell kleiner bleiben. Die Vermutung kann dabei beispielsweise von einer Auswertevorschrift umfasst sein, aus einer Analyse der mindestens zwei homogenen Bereiche, die auch Vorsegmentierung genannt werden kann, abgeleitet werden oder von einem Benutzer vorgegeben werden. Weiter kann die Vermutung z. B. aus Prozessdaten einer additiven Fertigung stammen, aus Erfahrungswerten abgeleitet werden oder aus einer Simulation des Fertigungsprozesses berechnet werden.

In einem weiteren Beispiel kann der Schritt Ermitteln von mindestens zwei homogenen Bereichen folgenden Unterschritt aufweisen: Erfassen von Mehrfachkanten zwischen den mindestens zwei homogenen Bereichen.

Bereits bei der Vorsegmentierung können damit Materialübergangsbereiche hinsichtlich einer Mehrfachkante analysiert werden. Diese Analyse kann modellbasiert sein und ermöglicht es, Bereiche zu identifizieren, in denen eine Mehrfachkante und somit ein bisher unentdeckter Materialbereich zwischen den beiden äußeren Materialien vorliegt. Dieser Materialbereich kann daraufhin in der Vorsegmentierung, z. B. im Labelfeld, berücksichtigt werden. Prinzipiell ist es auch denkbar, dass auf diese Weise sogar mehrere weitere Materialbereiche in einem Materialübergangsbereich identifiziert werden. Eine solche Mehrfachkantenfindung kann eine modellbasierte Segmentierung sein, die Grauwertübergänge identifizieren kann, in denen mindestens zwei Materialübergänge überlagert dargestellt sind.

Unter einer Mehrfachkante ist ein Kantenbereich zu verstehen, welcher mindestens zwei unterschiedliche Oberflächen umfasst.

Das Verfahren kann beispielsweise nach dem Schritt Segmentieren der digitalen Objektdarstellung weiter folgenden Schritt aufweisen: Analysieren der Bildinformationen der ermittelten Grenzbereiche zur Identifizierung von fehlerhaften Abschnitten der Materialübergangsbereiche in den ermittelten Grenzbereichen; und Korrigieren der fehlerhaften Abschnitte der Materialübergangsbereiche der ermittelten Grenzbereiche.

Nach dem Schritt Segmentieren der digitalen Objektdarstellung auf Basis der angepassten homogenen Bereiche kann eine Analyse der segmentierten Materialübergangsbereiche durchgeführt werden, um verbleibende Fehlsegmentierungen, d. h. fehlerhafte Abschnitte, zu identifizieren. Dabei wird nicht weiterhin auf Basis der Darstellung der lokalen Ähnlichkeit analysiert, sondern auf Basis der Grauwerte selbst. Da inzwischen die Materialgrenzen recht genau bestimmt wurden, ist somit sichergestellt, dass die Analyse an der richtigen Stelle sucht. Dies ist besonders vorteilhaft. Falls eine Fehlsegmentierung im Materialübergangsbereich identifiziert wird, wird die Segmentierung berichtigt. Bei Bedarf werden neue Materialbereiche eingefügt. Auch hier können modellbasierte Verfahren wie die oben erwähnte Mehrfachkantenfindung verwendet werden.

Weiter kann das Verfahren folgende Schritte aufweisen: Erfassen mindestens eines nicht-homogenen Bereiches in der Objektdarstellung; Analysieren der ortsaufgelösten Bildinformationen des mindestens einen nicht-homogenen Bereiches zum Ermitteln von Texturen in dem mindestens einen nichthomogenen Bereich; Segmentieren des mindestens einen nicht-homogenen Bereiches mittels der Texturen.

Insbesondere bei additiv gefertigten Bauteilen werden oft Kleinstrukturen, d. h. kleine Strukturen, wie z. B. Texturen, gefertigt. Diese Kleinstrukturen können mittels der Erfassung des mindestens eines nicht-homogenen Bereiches in der Objektdarstellung und dem Analysieren der ortsaufgelösten Bildinformationen des mindestens einen nicht-homogenen Bereiches zum Ermitteln von Texturen in dem mindestens einen nicht-homogenen Bereich besser segmentiert werden. Zur Erkennung der nicht-homogenen Bereiche kann ein von dem erfindungsgemäßen Verfahren verschiedenes Alternativverfahren verwendet werden.

Gemäß einem weiteren Beispiel kann der mindestens eine nicht-homogene Bereich Messdaten einer pulverförmigen Region des Objekts aufweisen.

In Objekten, die mittels additiver Fertigungsmethoden hergestellt werden, sind oftmals Bereiche angeordnet, die nicht aufgeschmolzenes Pulver aufweisen, das als feste Geometrie des gefertigten Objekts missinterpretiert werden könnte. Die Kombination der Schritte zur Erkennung von kleinen Strukturen und zur Texturanalyse verbessert damit die Korrektheit der Erfassung der gesamten Geometrie des additiv gefertigten Objekts.

Der mindestens eine nicht-homogene Bereich kann bei weiteren Analysen als Bereich behandelt werden, der abweichende Eigenschaften zu einem Material des nichthomogenen Bereichs aufweist.

Die als nicht-homogene Bereiche identifizierten Bereiche in den Messdaten werden bei der weitergehenden Auswertung gesondert behandelt. Dabei werden die nicht-homogenen Bereiche als separate Bereiche behandelt, die abweichende Materialeigenschaften haben. Die Materialeigenschaften können sich z. B. somit von den Eigenschaften des entsprechenden Vollmaterials unterscheiden. Insbesondere kann dies auch bedeuten, dass die nicht-homogenen Bereiche als nicht der Geometrie des Objekts zugehörig gewertet werden. Die nicht-homogenen Bereiche werden, da sie keine Belastungen aufnehmen können, sozusagen als Hintergrund zum Objekt gewertet. Die weiteren Analysen können beispielsweise dimensionelle Messtechnik, eine Defektanalyse oder eine mechanische Simulation sein.

In einem weiteren Aspekt wird ein Computerprogrammprodukt mit auf einem Computer ausführbaren Instruktionen bereitgestellt, welche auf einem Computer ausgeführt den Computer dazu veranlassen, das Verfahren nach der vorhergehenden Beschreibung durchzuführen.

Vorteile und Wirkungen sowie Weiterbildungen des Computerprogrammprodukts ergeben sich aus den Vorteilen und Wirkungen sowie Weiterbildungen des oben beschriebenen Verfahrens. Es wird daher in dieser Hinsicht auf die vorangegangene Beschreibung verwiesen. Unter einem Computerprogrammprodukt kann z. B. ein Datenträger verstanden werden, auf dem ein Computerprogrammelement gespeichert ist, das für einen Computer ausführbare Instruktionen aufweist. Alternativ oder zusätzlich kann unter einem Computerprogrammprodukt beispielsweise auch ein dauerhafter oder flüchtiger Datenspeicher, wie Flash-Speicher oder Arbeitsspeicher, verstanden werden, der das Computerprogrammelement aufweist. Weitere Arten von Datenspeichern, die das Computerprogrammelement aufweisen, seien damit jedoch nicht ausgeschlossen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: ein Flussdiagramm des computerimplementierten Verfahrens;
- Fig. 2: ein Flussdiagramm mit Unterschritten eines Ausführungsbeispiels des Schritts Ermitteln;
- Fig. 3: eine schematische Darstellung eines Multi-Materialübergangsbereichs;
- Fig. 4a, b: eine schematische Darstellung von Materialübergängen vor und nach dem Erstellen eines neuen Bereichs; und
- Fig. 5a-e: eine schematische Darstellung einer Abfolge von Schritten eines Ausführungsbeispiels des Verfahrens.

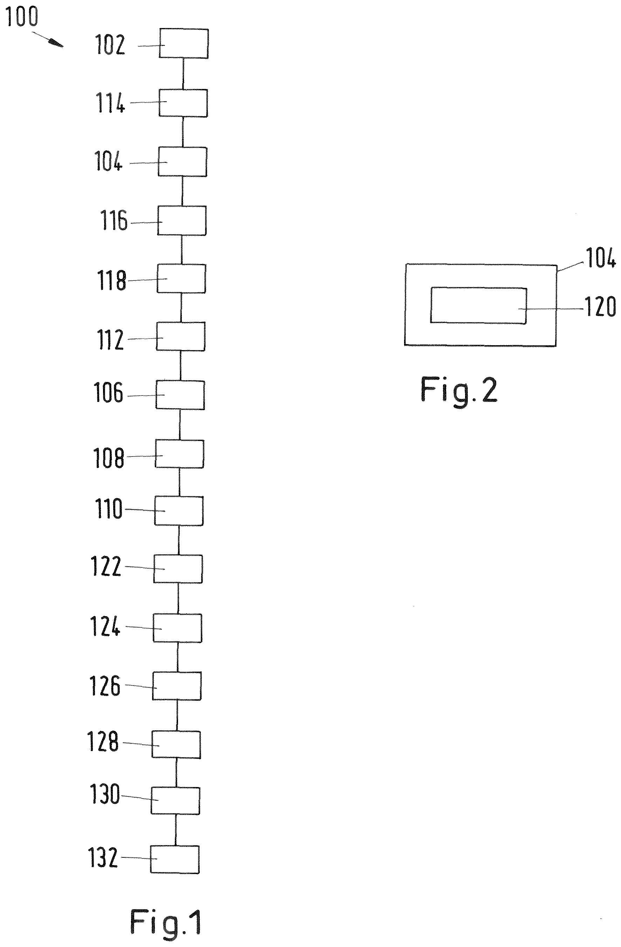

Das computerimplementierte Verfahren zur Segmentierung von Messdaten aus einer Messung eines Objekts mit folgenden in seiner Gesamtheit mit dem Referenzzeichen 100 bezeichnet. Das computerimplementierte Verfahren 100 wird zunächst mittels der Figur 1 erläutert.

Figur 1 zeigt ein Flussdiagramm einer Ausführungsform des computerimplementierten Verfahrens 100 zur Segmentierung von Messdaten aus einer Messung eines Objekts. Dabei weist das Objekt mindestens einen Materialübergangsbereich auf. Weiter umfassen die Messdaten mindestens eine Kleinstruktur, die eine Ausdehnung aufweist, die kleiner als eine vordefinierte Ausdehnung ist. Die vordefinierte Ausdehnung kann dabei z. B. durch einen Benutzer oder eine Auswertevorschrift vorgegeben werden. Weiter kann die vordefinierte Ausdehnung z. B. durch eine Simulation der Herstellung des Objekts ermittelt werden.

In einem ersten Schritt 102 werden die Messdaten des Objektes ermittelt. Die Ermittlung der Messdaten kann dabei zum Beispiel mittels einer computertomographischen (CT) Messung erfolgen. Damit seien jedoch andere Verfahren zur Ermittlung der Messdaten wie zum Beispiel Magnetresonanztomographie usw. nicht ausgeschlossen. Mittels der Messdaten wird eine digitale Objektdarstellung mit dem mindestens einen Materialübergangsbereich erzeugt. Die digitale Objektdarstellung umfasst eine Vielzahl von ortsaufgelösten Bildinformationen des Objekts.

Wenn die Messdaten CT-Daten sind, müssen sie nicht zwingend nur aus einem einzelnen Grauwert pro Voxel bestehen. So können es multimodale Daten, d. h. Daten mehrerer Sensoren, oder Daten aus einem Multienergie-CT-Scan sein, so dass für jeden Voxel mehrere Grauwerte vorliegen. Weiterhin können auch Ergebnisse von Analysen auf den ursprünglichen Messdaten als weiterer ortsaufgelöster Grauwert in dem Verfahren 100 genutzt werden, beispielsweise das Ergebnis einer Analyse der Faserorientierung oder der lokalen Porosität. Die zusätzlichen Informationen, die z. B. als Farbkanäle bezeichnet werden können, können somit wie bunte Voxeldaten interpretiert werden, auch wenn keine Farben des sichtbaren Spektrums repräsentiert werden. Diese zusätzlichen Informationen können in dem Verfahren 100 gewinnbringend genutzt werden.

In einem Schritt 114 wird eine digitale Darstellung einer Soll-Geometrie des Objektes an die digitale Objektdarstellung aus den ermittelten Messdaten gemäß Schritt 102 ausgerichtet. Die digitale Darstellung einer Soll-Geometrie des Objektes kann zum Beispiel eine CAD-Darstellung des Objektes sein, die vor der Herstellung des Objektes erstellt wurde. Die Geometrie im CAD-Modell muss nicht zwingend als Oberfläche oder Materialübergangsbereich beschrieben sein. Stattdessen oder zusätzlich kann es auch als Bilderstapel, Voxelvolumen oder Distanzfeld implizit dargestellt werden. Dies kann insbesondere bei einer additiven Fertigung verwendet werden. Weiter kann diese Information direkt bzw. ohne aufwendige Umrechnung in ein Labelfeld übersetzt werden. Weitere Darstellungsformen der Soll-Geometrie werden damit jedoch nicht ausgeschlossen.

Es werden mindestens zwei homogene Bereiche in den Messdaten und/oder in der digitalen Objektdarstellung auf Basis der digitalen Darstellung der Soll-Geometrie ermittelt. Da in der digitalen Darstellung der Soll-Geometrie die Materialübergangsbereiche und die Bauteile des Objektes bzw. die Bereiche des Objektes mit homogenen Materialien bekannt sind, kann aus der digitalen Darstellung der Soll-Geometrie nach dem Ausrichten im Schritt 114 auf homogene Bereiche in den Messdaten bzw. in der digitalen Objektdarstellung, die aus den Messdaten erzeugt wird, geschlossen werden.

Bei der Ausrichtung, d. h. bei der Anpassung der Geometriebereiche der Soll-Geometrie auf die Messdaten kann berücksichtigt werden, welche Materialien am Grauwertübergang beteiligt sind und wie sie angeordnet sind. Aus der Anordnung der Materialien kann sich die Orientierung des Materialübergangs ergeben. Diese Information ist meist in der Soll-Geometrie bekannt und kann jeweils lokal leicht aus den Messdaten ermittelt werden. Hiermit kann vermieden werden, dass nicht zueinanderpassende Materialübergangsbereiche einander zugeordnet werden, was eine fehlerhafte Ausrichtung zur Folge hätte.

Die Ausrichtung kann auch mittels einer nicht-rigiden Abbildung zwischen den Messdaten und der Soll-Geometrie durchgeführt werden.

In einem weiteren Schritt 104 werden mindestens zwei homogene Bereiche in den Messdaten und/oder in der digitalen Objektdarstellung ermittelt. Dazu werden die Bildinformationen daraufhin analysiert, ob homogene Bereiche vorhanden sind, zum Beispiel Bereiche innerhalb eines Grauwertintervalls oder mit ähnlicher Textur. Mindestens einer der mindestens zwei homogenen Bereiche weist dabei eine Kleinstruktur auf. Es können auch alle homogene Bereiche Kleinstrukturen aufweisen.

In einem optionalen Schritt 116 kann auf den ermittelten homogenen Bereichen ein Labelfeld erstellt werden, das die homogenen Bereiche mittels ortsaufgelösten Labelwerten in den Messdaten und/oder der digitalen Objektdarstellung definiert. Eine Ortsauflösung des Labelfeld ist dabei höher als eine Ortsauflösung der Messdaten. D.h., dass das Labelfeld zum Beispiel subvoxelgenau definiert sein kann. Weiter kann die Auflösung lokal variieren, um die Rechenzeit zu optimieren. An Positionen, an denen Kleinstrukturen vermutet werden, kann die Auflösung des Labelfelds groß gewählt werden. In den Bereichen, in denen keine Kleinstrukturen vermutet werden oder keine Kleinstrukturen angeordnet sein können, kann die Auflösung prinzipiell kleiner bleiben.

In einem weiteren optionalen Schritt 118 kann im Rahmen einer optionalen Vorsegmentierung ein Labelfeld erstellt werden, das die homogenen Bereiche mittels ortsaufgelöster Labelwerte in den Messdaten und/oder der digitalen Objektdarstellung definiert.

Das Labelfeld kann mit einem vorzeichenbehafteten oder vorzeichenlosen Distanzfeld kombiniert werden. Dabei wird jedem Labelwert mindestens ein Distanzwert des Distanzfeldes zugeordnet. Ein Distanzwert beschreibt dabei den Abstand zu einer nächstgelegenen Grenzfläche des homogenen Bereiches. Für jedes Material kann ein separates Distanzfeld erstellt werden.

Die Grenzflächen des homogenen Bereiches sind in den Materialübergangsbereichen angeordnet. Dabei kann ein Labelwert mehreren Distanzfeldern zugeordnet sein und damit mehreren Distanzwerten zugeordnet sein. D. h. die Materialübergangsbereiche für jedes Material in einem Objekt können jeweils durch ein eigenes Distanzfeld dargestellt werden. Mit einem Distanzfeld kann die Größe eines homogenen Bereiches mit geringem Speichereinsatz und mit wenig Rechenaufwand festgehalten werden.

Dabei kann Vorwissen genutzt werden, das z. B. darauf hinweist, dass von einem bestimmten Material im Objekt nur zusammenhängende Bereiche eines Volumens einer spezifischen Größe im Messbereich vorkommen können. Dies kann bei der Erstellung des Labelfelds berücksichtigt werden, indem ein zusammenhängender Bereich, der größerer ist, dann nicht diesem Material zugeordnet wird. Dies verringert Fehler bei der Segmentierung.

So können zum Beispiel Schrauben einer gewissen Maximalgröße im Messbereich vorhanden sein. Sollte durch das Verfahren an einer Stelle im Messvolumen ein größerer Bereich diesem Material zugeordnet werden, kann auf diese Weise festgestellt werden, dass die Zuordnung vermutlich fehlerhaft war.

Die Durchführung einer Ausrichtung, bzw. einer Registrierung an die Soll-Geometrie, z. B. einem CAD-Modell, kann prinzipiell so durchgeführt werden, dass Materialübergangsbereiche aus der Messung an die entsprechenden Materialübergangsbereiche der Soll-Geometrie angepasst werden. D. h., es wird diejenige Pose gesucht, bei der diese möglichst gut übereinstimmen. Dabei können auch explizit besondere Merkmale der Geometrien wie Ecken und Kanten identifiziert werden, um eine geeignete Zuordnung zu finden. Hierbei kann vom Benutzer oder von der Auswertevorschrift ausgewählt werden, welche Materialien, Materialübergänge oder Komponenten der Soll-Geometrie berücksichtigt bzw. nicht berücksichtigt werden sollen. Zudem kann, mit dem Wissen über die Art des Übergangs in den Messdaten, eine inkorrekte Zuordnung und somit eine inkorrekte Registrierung verhindert werden.

Jegliche Registrierung, z. B. zwischen den Messdaten und der Soll-Geometrie kann auch nichtrigide durchgeführt werden.

Weiter kann bei der Erstellung eines Labelfelds in den Messdaten nach bekannten Geometrieelementen, z. B. einer Schraube, aus einer Datenbank gesucht werden. Wird ein Geometrieelement bzw. innerhalb vorgegebener Grenzen ähnliches Geometrieelement im Messvolumen identifiziert, kann das Wissen über die Soll-Geometrie bei der weiteren Auswertung genutzt werden, indem beispielsweise den Grauwertbereichen bei der Vorsegmentierung das entsprechende Materiallabel zugeordnet wird oder die dazugehörige Soll-Geometrie an das Geometrieelement angepasst wird. Weiter kann alternativ oder zusätzlich ein entsprechender Auswerteplan automatisch aufgerufen werden. In einem weiteren Beispiel kann das Objekt in einem Szenenbaum automatisch gekennzeichnet bzw. benannt werden. Die Suche bekannten Geometrieelementen aus einer Datenbank kann auch in weiteren Schritten des Verfahrens 100 durchgeführt werden.

In einem weiteren optionalen Schritt 112 können den homogenen Bereichen spezifische Materialien zugeordnet werden, indem beispielsweise eine Analyse der den Bereichen zugehörigen Bildinformationen, die als Grauwerte vorliegen können, in den ursprünglichen Messdaten durchgeführt wird. Dabei weist mindestens einer der mindestens zwei homogenen Bereiche eine Kleinstruktur auf.

In einem Schritt 106 wird die lokale Ähnlichkeit der Vielzahl von ortsaufgelösten Bildinformation analysiert. Dabei kann zum Beispiel ein Änderungsverlauf der Vielzahl von ortsaufgelösten Bildinformation analysiert werden. Alternativ oder zusätzlich kann eine lokale Varianz der Vielzahl von ortsaufgelösten Bildinformationen analysiert werden. Die lokale Varianz ist schneller berechenbar und an Multi-Materialübergangsbereichen robuster als die Verwendung von Änderungsverläufen. Aus der lokalen Ähnlichkeit können erwartete Positionen der Materialübergangsbereiche zwischen verschiedenen Komponenten des Objekts ermittelt werden. Diese erwarteten Positionen der Materialübergangsbereiche sind die Positionen erwarteten Grenzen der im Schritt 104 ermittelten homogenen Bereiche.

Darauf werden in einem weiteren Schritt 108 die homogenen Bereiche angepasst. Dazu wird die Ausdehnung jedes homogenen Bereiches verändert, sodass ein Grenzbereich jedes homogenen Bereiches an der erwarteten Position eines Materialübergangsbereichs angeordnet ist. Die erwarteten Positionen der Materialübergangsbereiche begrenzen damit die homogenen Bereiche in der Objektdarstellung.

In einem weiteren Schritt 110 werden aus der digitalen Objektdarstellung mindestens zwei homogene Bereiche segmentiert. Schritt 110 kann zusammen mit den Schritten 106 und 108 als Hauptsegmentierung bezeichnet werden. Dabei werden ermittelte homogene Bereiche in der digitalen Objektdarstellung angepasst und voneinander abgegrenzt.

Im Schritt 110 können Informationen von anderen Sensoren verwendet werden. Bei der Anpassung der Lage der Materialübergangsbereiche werden die mit diesen Sensoren gewonnenen Oberflächeninformationen verwendet um die Materialübergangsbereiche in diese Richtung zu erweitern bzw., um zu verhindern, dass Materialübergangsbereiche über die so festgestellten Oberflächen hinaus ausgedehnt werden.

Danach kann in einem optionalen Schritt 122 eine Soll-Bildinformation aus mindestens einem homogenen Bereich ermittelt werden, wenn in mindestens einem der Schritte des Verfahrens ermittelt wird, dass dieser mindestens eine homogene Bereich eine Ausdehnung aufweist, die kleiner als eine vordefinierte Bereichsausdehnung ist. Dabei kann bei neu ermittelten Bereichen einer Analyse der Topologie durchgeführt werden. Dabei werden die Bildinformation in dem neuen Bereich analysiert und z. B. darauf untersucht, in welchen Bereichen z. B. Grauwerte liegen oder ob bestimmte Texturen erkennbar sind. Mittels der Analyse der Topologie kann dem neuen Bereiche ein Material zugeordnet werden. Hierbei wird die Information zu verbundenen Materialien in der Umgebung verwendet, d. h., dass die Topologie der Bereiche verwendet werden kann, um das Material im neuen Bereich einem angrenzenden Bereich zuzuordnen.

In einem weiteren optionalen Schritt 124 können die Bildinformationen der ermittelten Grenzbereiche zur Identifizierung von fehlerhaften Abschnitten der Materialübergangsbereiche in den ermittelten Grenzbereichen analysiert werden. Die genauen Positionen der Materialübergangsbereiche sind dabei in der Segmentierung in Schritt 110 bestimmt worden. Mittels der genauen Positionen der Materialübergangsbereiche wird sichergestellt, dass die Analyse der Bildinformationen im Schritt 124 an der korrekten Stelle nach Oberflächen sucht. Wenn festgestellt wird, dass im Schritt 110 eine fehlerhafte Segmentierung stattgefunden hat, das heißt, dass im Schritt 124 die im Schritt 110 fehlerhafte Positionen für die Abschnitte der Materialübergangsbereiche festgelegt wurden, werden diese im Schritt 124 mit hoher Wahrscheinlichkeit gefunden. Dazu können zum Beispiel Mehrfachkantenfindungs-Verfahren oder anderer modellbasierte Verfahren verwendet werden.

In einem weiteren optionalen Schritt 126 können nach dem Schritt 124 die fehlerhaften Abschnitte der Materialübergangsbereiche der ermittelten Grenzbereiche korrigiert werden. Dafür werden neue Materialbereiche eingeführt, zum Beispiel, falls im Schritt 124 festgestellt wird, dass innerhalb eines vorher fehlerhaft segmentierten Abschnittes eines Materialbereiches ein separater neuer Bereich angeordnet ist.

In einem weiteren optionalen Schritt 128 kann in der Objektdarstellung, d.h. in den Messdaten, ein nicht-homogener Bereich erfasst werden. Nicht-homogene Bereiche können zum Beispiel bei additiven Fertigungsverfahren in den hergestellten Objekten entstehen, wenn zum Beispiel Pulver während der additiven Fertigung nicht korrekt oder nur teilweise aufgeschmolzen wurde. Auf diese Weise kann ein Objekt Pulvereinschlüsse aufweisen, die nicht-homogene Bereiche innerhalb des Objekts in den Messdaten bilden. Diese nicht-homogenen Bereiche bilden in der Regel kleine Strukturen, die als Kleinstrukturen in den homogenen Bereichen angeordnet sein können.

In einem weiteren optionalen Schritt 130 können die ortsaufgelösten Bildinformationen des mindestens einen nicht-homogenen Bereiches analysiert werden. Dies wird durchgeführt, um Texturen in dem mindestens einen nicht-homogenen Bereich zu ermitteln. Insbesondere, wenn der nicht-homogene Bereich nicht-aufgeschmolzenes Pulver aufweist, kann der nicht-homogene Bereich stattdessen Texturen aufweisen, die auf der Körnung des Pulvers basiert. Texturen können auch durch Fasern in einem Material entstehen, das durch den nicht-homogenen Bereich abgebildet wird.

In einem weiteren optionalen Schritt 132 wird der mindestens eine nicht-homogene Bereich segmentiert. Der nicht-homogene Bereich wird dabei von den umliegenden homogenen Bereichen oder gegebenenfalls von weiteren nicht-homogenen Bereichen abgegrenzt. Dabei kann dem nicht-homogenen Bereich genau wie im Schritt 110 ein Material zugeordnet werden, wobei die Zuordnung auf den Bildinformationen in dem nicht-homogenen Bereich basiert.

In Figur 2 wird ein optionaler Unterschritt 120 des Schritts 104 dargestellt. Dabei umfasst der Unterschritt 120 das Erfassen von Mehrfachkanten zwischen den mindestens zwei homogenen Bereichen.

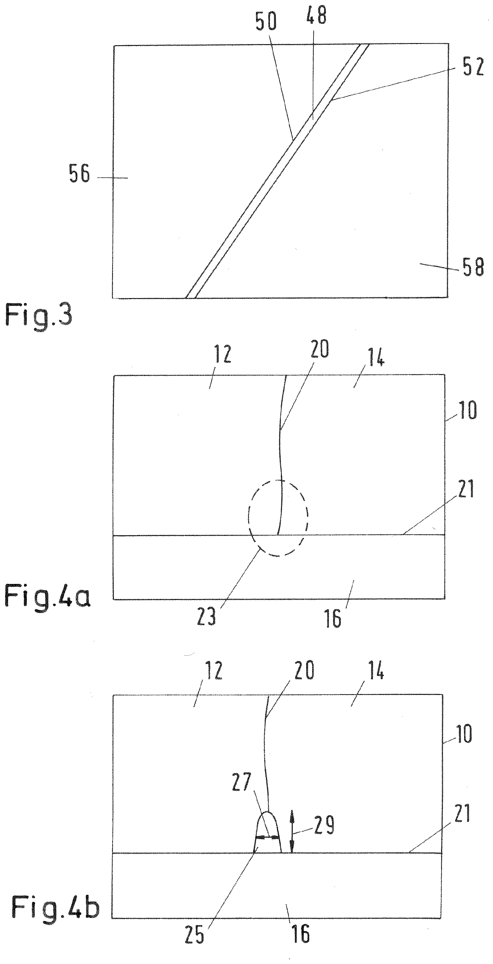

Figur 3 zeigt ein Beispiel eines Multi-Materialübergangsbereichs mit Mehrfachkanten. Dabei sind in der Figur 3 die Materialien 48, 54 und 56 dargestellt. Das Material 48 ist dabei zwischen den Materialien 54 und 56 angeordnet und weist eine sehr geringe Ausdehnung im Vergleich zu den anderen beiden Materialien auf. Zwischen dem Material 48 und dem Material 54 ist der Materialübergangsbereich 52 angeordnet. Zwischen dem Material 48 und dem Material 56 ist der Materialübergangsbereich 50 angeordnet. Insgesamt bilden die beiden Materialübergangsbereiche 50 und 52 einen Multi-Materialübergangsbereich, der mit konventionellen Verfahren lediglich schwer aufgelöst werden kann. In der Regel erkennen konventionelle Segmentierungsverfahren derartige Bereiche als lediglich einen Materialübergangsbereich. Mit dem computerimplementierten Verfahren 100 der oben beschriebenen Erfindung kann jedoch die Erkennung von mehreren Materialübergangsbereichen durchgeführt werden, die sehr nah beieinander liegen.

Die Figuren 4a und 4b erläutern den bereits oben erläuterten optionalen Schritt 112 näher. Dabei ist eine digitale Darstellung 10 von Bildinformationen dargestellt, das ein Schnittbild durch ein Objekt zeigt. Das Objekt weist dabei die Unterbereiche 12, 14 und 16 auf. Der Unterbereich 12 ist in Figur 4a durch den Materialübergangsbereich 20 von dem Unterbereich 14 abgegrenzt. Der Unterbereich 16 ist durch den Materialübergangsbereich 21 von den Unterbereichen 12 und 14 abgegrenzt.

In dem mit der gestrichelten Linie eingezeichneten Bereich 23 ist eine Kleinstruktur angeordnet, die jedoch in Figur 4a nicht aufgelöst wird und dementsprechend nicht dargestellt ist.

Mittels einer Untersuchung der Topologie werden der Bereich 23 und die Unterbereiche 12, 14 und 16 analysiert. Die Analyse ergibt in diesem Beispiel, dass der Bereich 23 von den Unterbereichen 12, 14 und 16 getrennt ist. Gemäß Figur 4b wird daher ein neuer Bereich als Unterbereich 25 gebildet, der zwischen den Unterbereichen 12, 14 und 16 angeordnet ist. Der neue Bereich stellt dabei eine Kleinstruktur dar, die eine Ausdehnung 27 bzw. 29 aufweist, die beide kleiner als eine vordefinierte Ausdehnung sind.

Alternativ kann der neue Bereich mit einem der Unterbereiche 12, 14, 16 zusammengelegt werden, wenn die Analyse der Topologie ergibt, dass der Bereich 23 mit einem oder mehreren der Unterbereiche 12 ,14 und 16 verbunden ist. Der neue Bereich kann auch auf mehrere Unterbereiche verteilt werden. Dabei werden Teile des neuen Bereiches 25 auf die Unterbereiche 12, 14 und/oder 16 verteilt.

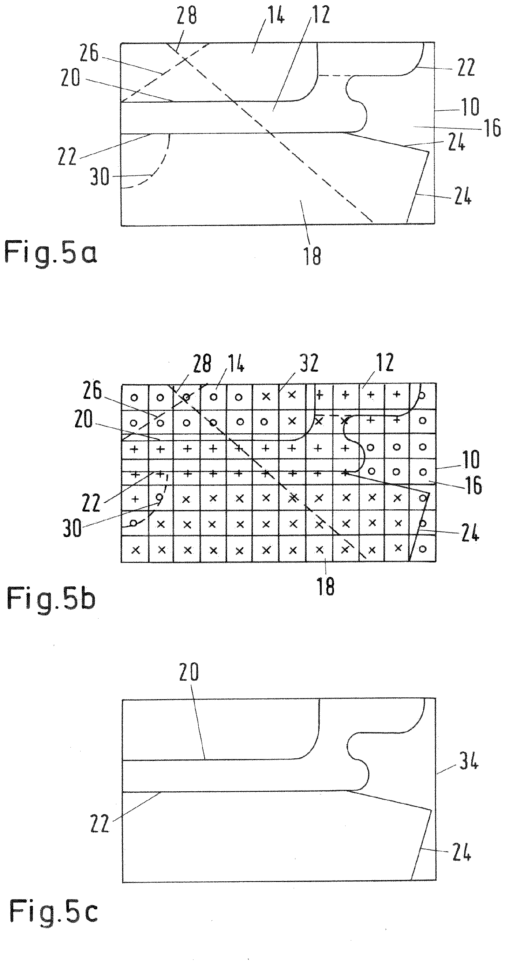

Die optionalen Schritte 116 und 118 sowie einige weitere Schritte des Verfahrens 100 werden im Folgenden mittels der Figuren 5a bis 5e näher erläutert, die eine Verwendung eines Labelfelds im Zusammenhang mit dem Verfahren 100 darstellen. Dabei zeigt Figur 5a schematisch eine digitale Darstellung 10 von Bildinformationen aus Messdaten eines Teilbereichs eines Objektes. Diese schematische digitale Objektdarstellung kann zum Beispiel eine Schnittdarstellung einer computertomographischen Messung sein. In diesem Fall können die Bildinformationen Grauwerte sein, die aus Übersichtlichkeitsgründen in der Figur 5a nicht als Grauwerte dargestellt sind. Lediglich Übergangsbereiche, in den sich die Grauwerte stark ändern, sind als Linien dargestellt.

Das Objekt weist die Unterbereiche 12, 14, 16 und 18 auf, deren Bildinformationen jeweils homogene Bereiche bilden. Der Unterbereich 12 ist mittels des Materialübergangsbereichs 20 gegenüber dem Unterbereich 14 abgegrenzt. Gegenüber den Unterbereichen 16 und 18 ist der Unterbereich 12 durch den Materialübergangsbereich 22 abgegrenzt. Zwischen dem Unterbereich 16 und dem Unterbereich 18 ist der Materialübergangsbereich 24 angeordnet. In der digitalen Darstellung 10 der Bildinformationen sind jedoch weiter die Übergangsbereiche 26, 28 und 30 zu erkennen, die jedoch aus Abschattungen oder anderen Artefakten resultieren und keine Materialübergangsbereiche darstellen.

Konventionelle Algorithmen haben dabei Probleme die Übergangsbereiche 26, 28 und 30 von Materialübergangsbereichen 20, 22 und 24 zu unterscheiden. Daher kann zunächst eine optionale Vorsegmentierung durchgeführt, bei der die Bildinformationen analysiert werden.

Dabei ist in Figur 5b die Darstellung 10 der Bildinformationen aus Figur 5a mit einem Raster als Labelfeld 32 dargestellt. Das Labelfeld 32 kann eine beliebige Auflösung aufweisen und zum Beispiel gröber als die Auflösung der Voxel oder Pixel, voxel-/pixelgenau oder subvoxel-/subpixelgenau sein. Das Labelfeld 32 und/oder das Distanzfeld wird in den meisten Fällen die gleiche Struktur und Auflösung wie die Messdaten aufweisen. Jedoch kann z. B. eine geringere Auflösung und somit größere Zellen, aber auch eine anisotrope Auflösung und somit Quader anstatt Würfel, gewählt werden. Weiter kann auch die Struktur, z. B. Tetraeder anstatt Würfel, angepasst werden. Zudem ist es nicht zwingend notwendig, mit Hilfe von einem oder mehreren Distanzfeldern eine subvoxelgenaue Repräsentation von den Materialübergangsbereichen zu ermöglichen. Erst bei bzw. nach der Ermittlung der Position der Materialübergangsbereiche kann dies nötig werden. Daher kann Rechenzeit sowie Speicherplatz gespart werden, wenn bei der Segmentierung lediglich auf dem Labelfeld gearbeitet wird und Distanzfelder erst bei der Ermittlung der Positionen der Materialübergangsbereiche verwendet werden.

Wenn die Bildinformationen zum Beispiel Grauwerte sind, können Grauwerte unterhalb eines gewissen Schwellenwertes einem ersten Material zugeordnet werden, zum Beispiel Luft, die in Figur 5b mit Label "o" gekennzeichnet wird. Grauwerte oberhalb eines weiteren Schwellenwertes werden einem zweiten Material zugeordnet, das in Figur 5b mit dem Label "+" dargestellt ist. Grauwerte, die zwischen den beiden Schwellwerten liegen, können einem dritten Material zugeordnet werden, dass in Figur 5b mit dem "x" gekennzeichnet ist.

Das Labelfeld kann mit einem Distanzfeld kombiniert sein.

Weiter können die Informationen aus der Soll-Geometrie über die einzelnen Teile des Objekts verwendet werden, z. B. bei Steckern mit nummerierten Pins 1 - 9, um Informationen über die jeweiligen Materialien zu erhalten. Demnach können auch Regionen des gleichen Materials auf verschiedene Teile des Objekts aufgeteilt werden. Auf diese Weise wird es übersichtlicher, die Messdaten auszuwerten. Im Idealfall werden die Regionen in einer bereits in der Soll-Geometrie definierten Hierarchiestruktur aufgelistet bzw. angezeigt.

Analog können auch die im Labelfeld getrennten bzw. nicht verbundenen Bereiche des gleichen Materials automatisch in verschiedene Teile aufgeteilt werden.

In einem nächsten Schritt wird gemäß Figur 5c eine Darstellung 34 ermittelt, die aus einer Analyse der lokalen Ähnlichkeit der Bildinformationen gewonnen wird. Dies kann zum Beispiel eine Gradientendarstellung sein. Hier sind die Materialübergangsbereiche 20 und 22 sowie 24 deutlich erkennbar. Die Übergangsbereiche 26 bis 30 sind dieser Darstellung nicht zu sehen. Im Gegensatz zu der Darstellung 10 der Bildinformationen können jedoch die einzelnen Unterbereiche des Objekts nicht qualitativ voneinander unterschieden werden. D.h., aus der Darstellung gemäß Figur 5c kann nicht auf das Material eines Unterbereiches geschlossen werden.

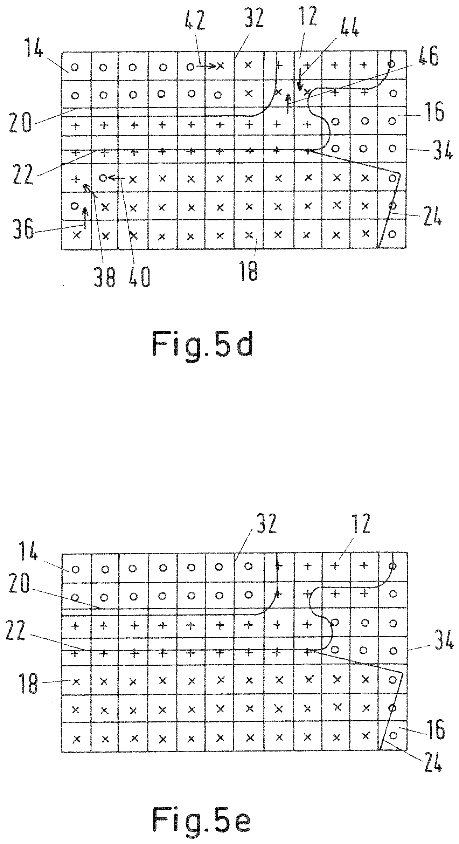

Die Darstellung 34 wird mit dem Labelfeld 32 verknüpft, wie in Figur 5d beispielhaft dargestellt ist. Dabei wird erkennbar, dass die homogenen Bereiche nicht an allen Abschnitten von den Materialübergangsbereiche 20, 22 und 24 begrenzt werden. Im Rahmen einer Hauptsegmentierung, werden daher die Grenzen der homogenen Bereiche verschoben, indem homogene Bereiche umgelabelt werden, zum Beispiel an dem Pfeilen 36 und 40 von "o" zu "x" und am Pfeil 38 von "+" zu "x". Der Bereich, der am Pfeil 36 bzw. 40 das Label "o" aufwies, ist in Figur 5e verschwunden und gehört nun zu dem Bereich mit dem Label "x". Am Pfeil 38 wurde der Bereich mit dem Label "+" verkleinert und der Bereich mit dem Label "o" vergrößert. Ähnliches geschieht an den Pfeilen 42, 44 und 46. An den Pfeilen 46 und 44 wachsen dabei zwei vorher getrennte homogene Bereiche mit dem Label "+" zusammen wobei ein Bereich mit dem Label "x" verschwindet.

Alternativ oder zusätzlich können zur Erstellung des Labelfelds einzelne Bereiche in der digitalen Objektdarstellung markiert werden, welche einem Material zugehörig sind. Die Markierung wird intelligent automatisch bis zum nächsten Materialübergangsbereich erweitert. Es ist auch möglich, einen Materialübergangsbereich durch einen Benutzer kennzeichnen zu lassen und automatisch zu vergrößern bis der Materialübergangsbereich z.B. mit anderen Materialübergangsbereichen zusammenstößt, so dass der Benutzer nicht gezwungen ist, einen vollständigen Materialübergangsbereich zu kennzeichnen. Somit ist kein genaues Einzeichnen nötig. Weiterhin können Operationen wie Opening, Closing, Erosion sowie Dilatation, eine Inversion, Boolesche Operatoren oder auch glättende Werkzeuge wie Filter genutzt werden, um die Bereiche im Labelfeld zu bearbeiten.

Weiter können Bereiche hervorgehoben werden, in denen nach Ansicht eines Benutzers Materialübergangsbereiche vorliegen. Dabei können Ankerpunkte gesetzt werden, wobei die Bearbeitung als Materialübergangsbereich und sozusagen als Meta-Info erfolgen kann, oder die Bildinformationen in der Darstellung der lokalen Ähnlichkeit direkt geändert werden.

Alternativ können fehlerhafte Materialübergangsbereiche auch entfernt bzw. abgeschwächt werden. Nach der Bearbeitung wird das Labelfeld auf dieser Grundlage neu berechnet. Dabei kann auch eine Warnung ausgegeben werden, wenn an der vom Benutzer definierten Stelle kein sinnvoller Materialübergangsbereich gefunden werden kann.

Es kann weiter eine oberflächenbasierte Bestimmung einer lokalen Datenqualität verwendet werden. Dabei kann jedem Materialübergangsbereich ein Qualitätswert zugeordnet werden, der die Genauigkeit des Materialübergangsbereichs darstellt.

Die Darstellung der lokalen Ähnlichkeit kann mittels verschiedener Verfahren aus den Messdaten, insbesondere aus Volumendaten, berechnet werden. So können zum Beispiel ein Sobel-Operator, ein Laplace-Filter oder ein Canny-Algorithmus verwendet werden. Die Wahl, welcher Algorithmus verwendet wird und wie dieser parametrisiert wird, kann vom Benutzer manuell durchgeführt werden. So kann, beispielsweise anhand eine Vorschaubilds, derjenige Algorithmus ausgewählt werden, welcher die besten Ergebnisse bei der Erstellung des Labelfelds bewirkt. Zudem kann die Darstellung der lokalen Ähnlichkeit vor dem Anpassen des Labelfelds mittels Filtern bearbeitet werden, um möglichst gute Ergebnisse zu erreichen. Ein Beispiel wäre die Verwendung eine Gauß-Filter, um den negativen Einfluss von Rauschen auf das Ergebnis beim Anpassen des Labelfelds zu minimieren.

Je nach Algorithmus ist es möglich, dass nach dem Anpassen des Labelfelds noch kleinere Bereiche inkorrekt segmentiert sind. Um dies zu beheben, können optional noch Unterschritte durchgeführt werden.

Dabei können auf die einzelnen Materialbereiche morphologische Operatoren wie Opening und/oder Closing angewendet werden, wodurch kleine Bereiche entfernt werden.

Weiterhin können zusammenhängende Bereiche unterhalb einer definierten Maximalgröße gelöscht und dem bzw. den umliegenden Materialien zugeordnet werden. Optional können dabei für Bereiche, welche von zwei oder mehr anderen Materialien umschlossen werden, mit einer abweichenden bzw. größeren Maximalgröße versehen werden oder gar nicht gelöscht werden, während Bereiche, welche nur von einem anderen Material umschlossen werden, weiterhin mit der oben genannten Maximalgröße behandelt werden. Auf diese Weise können z. B. dünne Schichten eines Materials zwischen zwei weiteren Materialien erhalten bleiben.

Figur 5e zeigt dabei das Resultat der Hauptsegmentierung. Hier stimmen die Grenzen der Labelfelder in etwa mit den Materialübergangsbereichen 20, 22 und 24 über ein. Die Bauteile bzw. Materialien 12, 14 und 16 sind damit segmentiert.

Auf Basis des angepassten Labelfelds werden die Materialübergangsbereiche, die z. B. eine lokale Oberfläche darstellen können, mit größerer Genauigkeit berechnet. Dazu kann ein weiterer, hierauf spezialisierter Algorithmus verwendet werden. Dabei wird in einem kleinen Umkreis, z. B. wenige Voxel, nach der exakten Lage des Materialübergangsbereichs gesucht. Dies ist zumeist Voraussetzung für exakte dimensionelle Messungen, welche auf CT-Daten durchgeführt werden sollen.

Dazu können prinzipiell verschiedene Algorithmen verwendet werden. Z. B. Algorithmen, welche auf den Messdaten direkt arbeiten. Diese können beispielsweise mittels eines lokalen oder globalen Schwellwerts oder durch Suche nach dem maximalen Gradienten oder nach einem Wendepunkt des Grauwertverlaufs die lokale Position der Oberfläche bestimmen.

Weiter kann beispielsweise auf der Darstellung der lokalen Ähnlichkeit bzw. Gradienten- oder Varianzdarstellung die exakte lokale Position der Materialübergangsbereiche bestimmt werden, indem beispielsweise ein Polynom zweiten Grades an den Grauwertverlauf angepasst wird. Die Position des Extremums dieses Polynoms kann als Position der Oberfläche verwendet werden.

Weitere Algorithmen seien durch die oben angeführten Erläuterungen jedoch nicht ausgeschlossen.

Aus dem Labelfeld und der darin implizit gespeicherten Repräsentation kann das Wissen über die, ggf. ungefähre, Richtung einer Oberflächennormale, einer in dem Materialübergangsbereich angeordneten Oberfläche, oder über die im Materialübergangsbereich angeordneten Materialien abgeleitet werden. Dieses Wissen kann von einigen Algorithmen verwendet werden, um exaktere Ergebnisse zu erreichen. Dieses Wissen kann falls verfügbar auch alternativ aus der Soll-Geometrie, z. B. einem CAD-Modell, entnommen werden.

Dies wird dann in Kombination mit einem Algorithmus durchgeführt, welcher die Information einer Startoberfläche benötigt oder benutzen kann, um ausgehend von dieser die genaue Position der Oberfläche zu berechnen.

Weiter kann eine Reduzierung von Kegelstrahlartefakten, von Samplingartefakten und von Rauschen vor oder nach der Erstellung des Labelfelds durchgeführt werden.

Die Erfindung ist in den Ansprüchen 1- 14 offenbart.

## Patentansprüche

1. Computerimplementiertes Verfahren zur Segmentierung von Messdaten aus einer Messung eines Objekts, wobei das Objekt mindestens einen Materialübergangsbereich aufweist, wobei durch die Messdaten eine digitale Objektdarstellung mit dem mindestens einen Materialübergangsbereich erzeugt wird, wobei die digitale Objektdarstellung eine Vielzahl von ortsaufgelösten Bildinformationen des Objekts aufweist, wobei das Verfahren (100) die folgenden Schritte aufweist:
- Ermitteln (102) der Messdaten, wobei die Messdaten mindestens eine Kleinstruktur aufweisen, die eine Textur oder eine Struktur ist, die eine Ausdehnung aufweist, die kleiner als eine vordefinierte Ausdehnung ist;
- Ausrichten (114) einer digitalen Darstellung einer Soll-Geometrie an die digitale Objektdarstellung; wobei die Bereiche der Soll Geometrie den entsprechenden Bereichen der Messdaten zugeordnet sind; wobei die Ermittlung der Position der Materialübergänge auf Vorwissen aus der Soll- Geometrie zurückgreift im Rahmen einer Vorsegmentierung;
- Ermitteln (104) von mindestens zwei homogenen Bereichen in den Messdaten und/oder in der digitalen Objektdarstellung auf Basis der digitalen Darstellung der Soll-Geometrie, wobei mindestens einer der mindestens zwei homogenen Bereiche eine Kleinstruktur aufweist;
- Analysieren (106) einer lokalen Ähnlichkeit der Vielzahl von ortsaufgelösten Bildinformationen;
- Identifizieren einer erwarteten Positionen eines Materialübergangsbereiches mittels der analysierten lokalen Ähnlichkeit, wobei die analysierte lokale Ähnlichkeit in einem Materialübergangsbereich einen vorbestimmten Schwellwert für die lokale Ähnlichkeit überschreitet;
- Anpassen (108) einer Ausdehnung jedes homogenen Bereichs bis mindestens ein Grenzbereich jedes homogenen Bereiches an der erwarteten Position eines Materialübergangsbereichs angeordnet ist;
- Segmentieren (110) der digitalen Objektdarstellung auf Basis der angepassten homogenen Bereiche.

2. Verfahren nach Anspruch 1, **dadurch gekennzeichnet, dass** der mindestens eine Materialübergangsbereich ein Multi-Materialübergangsbereich mit mindestens zwei Materialübergängen ist.

3. Verfahren nach Anspruch 1 oder 2, **dadurch gekennzeichnet, dass** nach dem Schritt Ermitteln (104) von mindestens zwei homogenen Bereichen in den Messdaten und/oder in der digitalen Objektdarstellung, wobei mindestens einer der mindestens zwei homogenen Bereiche eine Kleinstruktur aufweist, den mindestens zwei homogenen Bereichen vordefinierte Materialien zugeordnet (112) werden.

4. Verfahren nach Anspruch 3, **dadurch gekennzeichnet, dass** einem der mindestens zwei homogenen Bereiche ein vordefiniertes Material auf Basis einer Topologie des einen der mindestens zwei homogenen Bereiche zugeordnet (112) wird, wenn in mindestens einem der Schritte des Verfahrens ermittelt wird, dass dieser mindestens eine homogene Bereich eine Ausdehnung aufweist, die kleiner als die vordefinierte Ausdehnung ist.

5. Verfahren nach einem der Ansprüche 1 bis 4, **dadurch gekennzeichnet, dass** das Analysieren (106) der lokalen Ähnlichkeit auf einem Änderungsverlauf der Vielzahl von ortsaufgelösten Bildinformationen und/oder einer lokalen Varianz der Vielzahl von ortsaufgelösten Bildinformationen basiert.

6. Verfahren nach einem der Ansprüche 1 bis 5, **dadurch gekennzeichnet, dass** das Verfahren (100) nach dem Schritt Ermitteln (104) von mindestens zwei homogenen Bereichen in den Messdaten und/oder in der digitalen Objektdarstellung, wobei mindestens einer der mindestens zwei homogenen Bereiche eine Kleinstruktur aufweist, den folgenden Schritt aufweist:
- Erstellen (116) eines Labelfelds, das die homogenen Bereiche mittels ortsaufgelöster Labelwerte in den Messdaten und/oder der digitalen Objektdarstellung definiert; wobei eine Ortsauflösung des Labelfelds höher ist als eine Ortsauflösung der Messdaten.

7. Verfahren nach einem der Ansprüche 1 bis 6, **dadurch gekennzeichnet, dass** das Verfahren (100) nach dem Schritt Ermitteln (104) von mindestens zwei homogenen Bereichen in den Messdaten und/oder in der digitalen Objektdarstellung, wobei mindestens einer der mindestens zwei homogenen Bereiche eine Kleinstruktur aufweist, den folgenden Schritt aufweist:
- Erstellen (118) eines Labelfelds, das die homogenen Bereiche mittels ortsaufgelöster Labelwerte in den Messdaten und/oder der digitalen Objektdarstellung definiert;
wobei mindestens in vordefinierten Regionen der Objektdarstellung eine Ortsauflösung des Labelfelds höher ist als eine Ortsauflösung der Messdaten,
wobei in den Restregionen der Objektdarstellung die Ortsauflösung des Labelfelds höchstens so groß ist wie die Ortsauflösung der Messdaten.

8. Verfahren nach einem der Ansprüche 1 bis 7, **dadurch gekennzeichnet, dass** der Schritt Ermitteln (104) von mindestens zwei homogenen Bereichen folgenden Unterschritt aufweist:
- Erfassen (120) von Mehrfachkanten zwischen den mindestens zwei homogenen Bereichen.

9. Verfahren nach einem der Ansprüche 1 bis 8, **dadurch gekennzeichnet, dass** das Verfahren (100) folgenden weiteren Schritt aufweist:
- Ermitteln (122) einer Soll-Bildinformation aus mindestens einem homogenen Bereich, wenn in mindestens einem der Schritte des Verfahrens ermittelt wird, dass dieser mindestens eine homogene Bereich eine Ausdehnung aufweist, die kleiner als eine vordefinierte Bereichsausdehnung ist.

10. Verfahren nach einem der Ansprüche 1 bis 9, **dadurch gekennzeichnet, dass** das Verfahren (100) nach dem Schritt Segmentieren (110) der digitalen Objektdarstellung weiter folgenden Schritt aufweist:
- Analysieren (124) der Bildinformationen der ermittelten Grenzbereiche zur Identifizierung von fehlerhaften Abschnitten der Materialübergangsbereiche in den ermittelten Grenzbereichen; und
- Korrigieren (126) der fehlerhaften Abschnitte der Materialübergangsbereiche der ermittelten Grenzbereiche.

11. Verfahren nach einem der Ansprüche 1 bis 10, **dadurch gekennzeichnet, dass** das Verfahren (100) weiter folgende Schritte aufweist:
- Erfassen (128) mindestens eines nicht-homogenen Bereiches in der Objektdarstellung;
- Analysieren (130) der ortsaufgelösten Bildinformationen des mindestens einen nicht-homogenen Bereiches zum Ermitteln von Texturen in dem mindestens einen nicht-homogenen Bereich;
- Segmentieren (132) des mindestens einen nicht-homogenen Bereiches mittels der Texturen.

12. Verfahren nach Anspruch 11, **dadurch gekennzeichnet, dass** der mindestens eine nicht-homogene Bereich Messdaten einer pulverförmigen Region des Objekts aufweist.

13. Verfahren nach Anspruch 11 oder 12, **dadurch gekennzeichnet, dass** der mindestens eine nicht-homogene Bereich bei weiteren Analysen als Bereich behandelt wird, der abweichende Eigenschaften zu einem Material des nicht-homogenen Bereichs aufweist.

14. Computerprogrammprodukt mit auf einem Computer ausführbaren Instruktionen, welche auf einem Computer ausgeführt den Computer dazu veranlassen, das Verfahren nach einem der vorhergehenden Ansprüche durchzuführen.

## Claims

1. A computer-implemented method for segmenting measurement data from a measurement of an object, the object having at least one material transition region, the measurement data generating a digital object representation having the at least one material transition region, the digital object representation comprising a plurality of spatially-resolved image information of the object, the method (100) comprising the steps of:
- determining (102) the measurement data, wherein the measurement data comprises at least one small-scale structure that is a texture or a structure having an extent that is less than a predefined extent;
- aligning (114) a digital representation of a target geometry with the digital object representation; wherein the regions of the target geometry are associated with the corresponding regions of the measurement data; wherein the determination of the position of the material transitions draws on prior knowledge from the target geometry in the context of a pre-segmentation;
- determining (104) at least two homogeneous regions in the measurement data and/or in the digital object representation on the basis of the digital representation of the target geometry, wherein at least one of the at least two homogeneous regions has a small-scale structure;
- analysing (106) a local similarity of the plurality of spatially resolved image information;
- identifying an expected location of a material transition region using the analysed local similarity, wherein the analysed local similarity in a material transition region exceeds a predetermined local similarity threshold;
- adjusting (108) an extent of each homogeneous region until at least one boundary region of each homogeneous region is located at the expected location of a material transition region;
- segmenting (110) the digital object representation based on the adjusted homogeneous regions.

2. Method according to claim 1, **characterized in that** the at least one material transition region is a multi-material transition region with at least two material transitions.

3. Method according to claim 1 or 2, **characterized in that**, after the step of determining (104) at least two homogeneous regions in the measurement data and/or in the digital object representation, at least one of the at least two homogeneous regions having a small-scale structure, predefined materials are assigned (112) to the at least two homogeneous regions.

4. Method according to claim 3, **characterized in that** a predefined material is assigned (112) to one of said at least two homogeneous regions based on a topology of said one of said at least two homogeneous regions if it is determined in at least one of the steps of the method that said at least one homogeneous region has an extent smaller than said predefined extent.

5. Method according to any one of claims 1 to 4, **characterized in that** the analysing (106) of the local similarity is based on a change history of the plurality of spatially resolved image information and/or a local variance of the plurality of spatially resolved image information.

6. Method according to any one of claims 1 to 5, **characterized in that** after the step of determining (104) at least two homogeneous regions in the measurement data and/or in the digital object representation, wherein at least one of the at least two homogeneous regions comprises a small-scale structure, the method (100) comprises the following step:
- creating (116) a label field defining the homogeneous regions by spatially resolved label values in the measurement data and/or the digital object representation; wherein a spatial resolution of the label field is higher than a spatial resolution of the measurement data.

7. Method according to any one of claims 1 to 6, **characterized in that** after the step of determining (104) at least two homogeneous regions in the measurement data and/or in the digital object representation, at least one of the at least two homogeneous regions having a small-scale structure, the method (100) comprises the step of:
- creating (118) a label field defining the homogeneous regions by spatially resolved label values in the measurement data and/or the digital object representation; wherein at least in predefined regions of the object representation a spatial resolution of the label field is higher than a spatial resolution of the measurement data,
wherein in the remaining regions of the object representation the spatial resolution of the label field is at most as great as the spatial resolution of the measurement data.

8. Method according to one of claims 1 to 7, **characterized in that** the step of determining (104) at least two homogeneous regions has the following substep:
- detecting (120) multiple edges between the at least two homogeneous regions.

9. Method according to any one of claims 1 to 8, **characterized in that** the method (100) comprises the following further step:
- determining (122) a target image information from at least one homogeneous region if it is determined in at least one of the steps of the method that said at least one homogeneous region has an extent that is smaller than a predefined region extent.

10. Method according to any one of claims 1 to 9, **characterized in that** after the step of segmenting (110) the digital representation of the object, the method (100) further comprises the step:
- analysing (124) the image information of the detected boundary regions to identify defective portions of the material transition regions in the detected boundary regions; and
- correcting (126) the defective portions of the material transition regions of the determined boundary regions.

11. Method of any one of claims 1 to 10, **characterized in that** the method (100) further comprises the steps of:
- detecting (128) at least one non-homogeneous region in the object representation;
- analysing (130) the spatially resolved image information of the at least one non-homogeneous region to determine textures in the at least one non-homogeneous region;
- segmenting (132) the at least one non-homogeneous region using the textures.

12. Method according to claim 11, **characterised in that** the at least one non-homogeneous region comprises measurement data of a powdery region of the object.

13. Method according to claim 11 or 12, **characterized in that** the at least one non-homogeneous region is treated in further analyses as a region having properties different from a material of the non-homogeneous region.

14. Computer program product comprising instructions executable on a computer, the instructions, when being executed on a computer, cause the computer to perform the method of any one of the preceding claims.

## Revendications

1. Procédé mis en oeuvre par ordinateur pour segmenter des données de mesure provenant d'une mesure d'un objet, l'objet présentant au moins une zone de transition de matériau, une représentation numérique de l'objet avec la au moins une zone de transition de matériau étant générée par les données de mesure, la représentation numérique de l'objet présentant une pluralité d'informations d'image à résolution spatiale de l'objet, le procédé (100) comprenant les étapes suivantes :
- Déterminer (102) les données de mesure, les données de mesure comprenant au moins une petite structure, qui est une texture ou une structure ayant une étendue inférieure à une étendue prédéfinie ;
- Aligner (114) une représentation numérique d'une géométrie nominale sur la représentation numérique de l'objet ; les zones de la géométrie nominale étant associées aux zones correspondantes des données de mesure ; la détermination de la position des transitions de matière faisant appel à des connaissances préalables issues de la géométrie nominale dans le cadre d'une pré-segmentation ;
- Déterminer (104) au moins deux zones homogènes dans les données de mesure et/ou dans la représentation numérique de l'objet sur la base de la représentation numérique de la géométrie nominale, au moins une des au moins deux zones homogènes présentant une petite structure ;
- Analyser (106) une similarité locale de la pluralité d'informations d'image à résolution spatiale ;
- Identifier une position attendue d'une zone de transition de matériau au moyen de la similarité locale analysée, la similarité locale analysée dans une zone de transition de matériau dépassant un seuil prédéterminé pour la similarité locale ;
- Ajuster (108) une extension de chaque région homogène jusqu'à ce qu'au moins une région limite de chaque région homogène soit située à la position attendue d'une région de transition de matériau ;
- Segmenter (110) la représentation numérique de l'objet sur la base des zones homogènes ajustées.

2. Procédé selon la revendication 1, **caractérisé en ce que** ladite au moins une zone de transition de matériau est une zone de transition multi-matériaux comprenant au moins deux transitions de matériau.

3. Procédé selon la revendication 1 ou 2, **caractérisé en ce qu'**après l'étape de déterminer (104) au moins deux zones homogènes dans les données de mesure et/ou dans la représentation numérique de l'objet, au moins l'une des au moins deux zones homogènes présentant une petite structure, des matériaux prédéfinis sont associés (112) aux au moins deux zones homogènes.

4. Procédé selon la revendication 3, **caractérisé en ce qu'**un matériau prédéfini est attribué (112) à l'une des au moins deux zones homogènes sur la base d'une topologie de l'une des au moins deux zones homogènes si, dans au moins une des étapes du procédé, il est déterminé que cette au moins une zone homogène présente une étendue qui est inférieure à l'étendue prédéfinie.

5. Procédé selon l'une quelconque des revendications 1 à 4, **caractérisé en ce que** l'analyse (106) de la similarité locale est basée sur une courbe de variation de la pluralité d'informations d'image à résolution spatiale et/ou sur une variance locale de la pluralité d'informations d'image à résolution spatiale.

6. Procédé selon l'une des revendications 1 à 5, **caractérisé en ce qu'**après l'étape de déterminer (104) au moins deux zones homogènes dans les données de mesure et/ou dans la représentation numérique de l'objet, au moins l'une desdites au moins deux zones homogènes présentant une petite structure, le procédé (100) comprend l'étape suivante :
- Créer (116) un champ d'étiquettes qui définit les zones homogènes au moyen de valeurs d'étiquettes résolues en fonction de l'emplacement dans les données de mesure et/ou la représentation numérique de l'objet ;
dans lequel une résolution spatiale du champ d'étiquettes est supérieure à une résolution spatiale des données de mesure.

7. Procédé selon l'une des revendications 1 à 6, **caractérisé en ce qu'**après l'étape de déterminer (104) au moins deux zones homogènes dans les données de mesure et/ou dans la représentation numérique de l'objet, au moins l'une des au moins deux zones homogènes présentant une petite structure, le procédé (100) comprend l'étape suivante :
- Créer (118) un champ d'étiquettes qui définit les zones homogènes au moyen de valeurs d'étiquettes résolues en fonction de la localisation dans les données de mesure et/ou la représentation numérique de l'objet ;
dans lequel, au moins dans des régions prédéfinies de la représentation de l'objet, une résolution spatiale du champ d'étiquettes est supérieure à une résolution spatiale des données de mesure,
dans les régions restantes de la représentation de l'objet, la résolution spatiale du champ de label est au maximum aussi grande que la résolution spatiale des données de mesure.

8. Procédé selon l'une des revendications 1 à 7, **caractérisé en ce que** l'étape de déterminer (104) au moins deux zones homogènes comprend la sous-étape suivante :
- Détecter (120) des arêtes multiples entre les au moins deux zones homogènes.

9. Procédé selon l'une des revendications 1 à 8, **caractérisé en ce que** le procédé (100) comprend l'étape supplémentaire suivante :
- Déterminer (122) une information d'image cible à partir d'au moins une zone homogène si, dans au moins une des étapes du procédé, il est déterminé que cette au moins une zone homogène présente une étendue qui est inférieure à une étendue de zone prédéfinie.

10. Procédé selon l'une des revendications 1 à 9, **caractérisé en ce qu'**après l'étape de segmente (110) la représentation numérique de l'objet, le procédé (100) comprend en outre l'étape suivante :
- Analyser (124) les informations d'image des zones limites déterminées pour identifier les parties défectueuses des zones de transition de matériau dans les zones limites déterminées ; et
- Corriger (126) les portions défectueuses des zones de transition de matière des zones limites déterminées.

11. Procédé selon l'une quelconque des revendications 1 à 10, **caractérisé en ce que** le procédé (100) comprend en outre les étapes suivantes :
- Détecter (128) au moins une zone non homogène dans la représentation de l'objet ;
- Analyser (130) les informations d'image à résolution spatiale de la au moins une zone non homogène pour déterminer les textures dans la au moins une zone non homogène ;
- Segmenter (132) la au moins une zone non homogène au moyen des textures.

12. Procédé selon la revendication 11, **caractérisé en ce que** ladite au moins une zone non homogène comprend des données de mesure d'une région pulvérulente de l'objet.

13. Procédé selon la revendication 11 ou 12, **caractérisé en ce que** ladite au moins une région non homogène est traitée, lors d'analyses ultérieures, comme une région présentant des propriétés différentes de celles d'un matériau de la région non homogène.

14. Produit programme d'ordinateur comprenant des instructions exécutables sur un ordinateur qui exécutées sur un ordinateur, amènent l'ordinateur à exécuter le procédé selon l'une quelconque des revendications précédentes.
